# EUROPEAN PATENT APPLICATION

(11) **EP 1 281 921 A2**
(43) Date of publication of application: **05.02.2003**
(21) Application number: 02016108.9
(22) Date of filing: 19.07.2002
(51) Int. Cl.: F28D 9/00

(54) **Counterflow plate-fin heat exchanger with extended header fin**

(30) Priority: 03.08.2001 US 922367
(71) Applicant: Ingersoll-Rand Energy Systems Corporation, Portsmouth, NH 03801-2866 (US)
(72) Inventor: Haplau-Colan, Alexander, Hampton, NH 03842 (US); Nash, James S., North Hampton, NH 03862 (US)
(74) Representative: Grünecker, Kinkeldey, Stockmair & Schwanhäusser Anwaltssozietät

(57) **Abstract**

A plate-fin heat exchanger (18) includes a stacked array of cells (22). Each cell (22) includes top and bottom sheets (58,62) defining manifolds (26,30) and header finned members (66,70) disposed between the top and bottom sheets (58,62). The top and bottom sheets (58,62) include substantially planar portions (82), diverging portions (86) angled with respect to the planar portions (82), and divergence edges (90) defined between the planar (82) and diverging (86) portions. The header finned member (70) extends beyond the divergence edges (90) of the top and bottom sheets (58,62) and is supported in cantilevered fashion within the manifold.

## Description

### BACKGROUND

The invention relates to recuperators primarily for use in gas turbine engines, and more particularly to a fin construction for the header portions of such recuperators.

### SUMMARY

The present invention provides a cell construction for a recuperator that is preferably used in a recuperated microturbine engine. The cell includes top and bottom sheets having aligned manifold openings. The cell also includes a header finned member disposed between the top and bottom sheets and having a cantilever portion extending into the manifold openings in cantilevered fashion. The header finned member is metallurgically bonded to the top and bottom sheets. The cantilever portion includes a free end edge. A high pressure fluid, such as compressed air is supplied into the cell, and causes a state of tensile stress in the header finned member. The free end edge of the cantilever portion is exposed to substantially reduced tensile stress because the cantilever portion is free from a direct metallurgical bond to the top and bottom sheets.

Other features and advantages of the invention will become apparent to those skilled in the art upon review of the following detailed description, claims, and drawings.

### BRIEF DESCRIPTION OF THE DRAWINGS

Fig. 1 is an exploded view of a recuperated microturbine engine embodying the invention.
Fig. 2 is a perspective view of the recuperator of the engine illustrated in Fig. 1.
Fig. 3 is an exploded view of one cell of the recuperator.
Fig. 4 is an enlarged perspective view of a portion of the recuperator.
Fig. 5 is a graphical representation of the tensile stress on the header finned members of the recuperator.

Before one embodiment of the invention is explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting. The use of "including" and "comprising" and variations thereof herein is meant to encompass the items listed thereafter and equivalents thereof as well as additional items. The use of "consisting of" and variations thereof herein is meant to encompass only the items listed thereafter. The use of letters to identify elements of a method or process is simply for identification and is not meant to indicate that the elements should be performed in a particular order.

### DETAILED DESCRIPTION

For the sake of brevity, not all aspects of plate fin heat exchanger and microturbine combustor technology are discussed herein. For additional description of that technology, reference is made to U.S. Patent Application Nos. 09/790,464 filed February 22, 2001, 09/668,358 filed September 25, 2000, 09/409,641 filed October 1, 1999, 09/239,647 filed January 29, 1999 (now U.S. Patent No. 5,983,992), and 08/792,261 filed January 13, 1997. The entire contents of these applications are incorporated by reference herein.

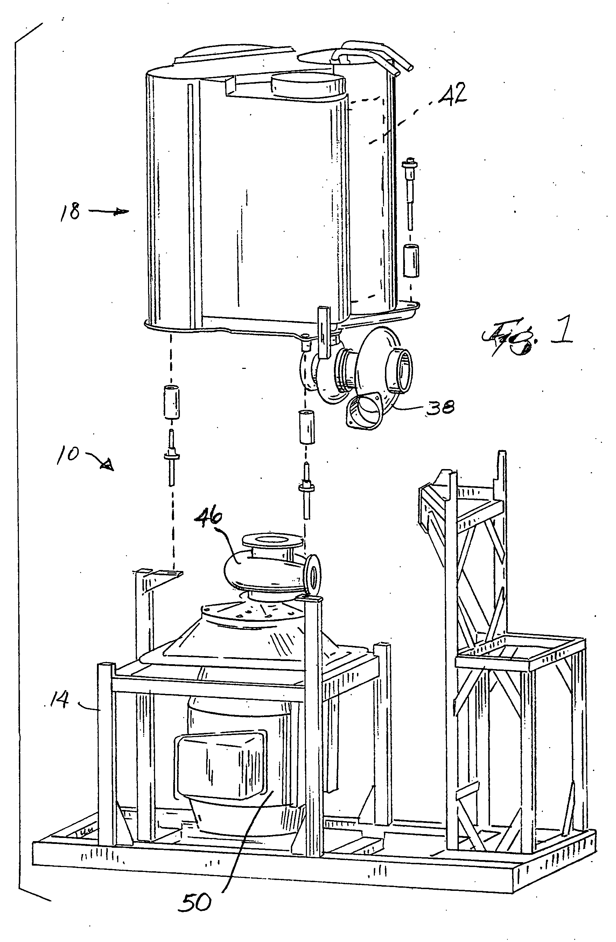

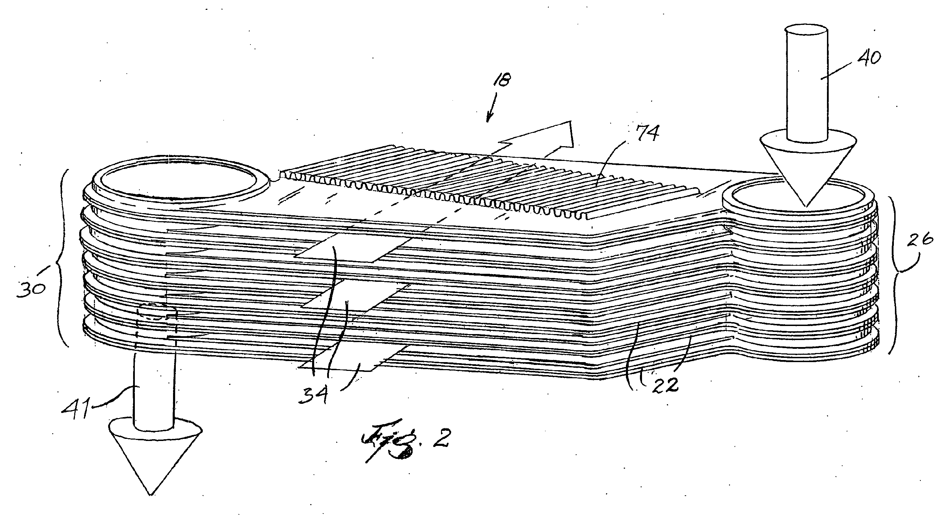

Fig. 1 illustrates a recuperated microturbine engine 10 that includes a frame 14. A recuperator or heat exchanger 18 is mounted to the frame 14. As seen in Fig. 2, the recuperator 18 includes a plurality of stacked cells 22 that are metallurgically bonded (e.g., by welding and/or brazing) to each other to define an inlet manifold 26 and an outlet manifold 30. The interior spaces or volumes of the cells 22 communicate between the inlet and outlet manifolds 26, 30. Exhaust gas flow spaces are defined between the cells 22 for a flow of hot exhaust gases 34. The details of the recuperator construction will be discussed in more detail below.

The engine 10 also includes an air compressor 38 that provides compressed air 40 (Fig. 2) to the inlet manifold 26 of the recuperator 18 through an air compressor duct (not shown). The compressed air flows into the cells 22, where it is heated by the cross-flow of hot exhaust gases 34, and exits the recuperator 18 through the outlet manifold 30 as preheated compressed air 41 (Fig. 2). A combustor 42 is housed within or otherwise communicates with the outlet manifold 30 of the recuperator 18. The preheated compressed air 41 exiting the recuperator 18 is mixed with a fuel (e.g., natural gas), and is then burned by the combustor 42. The efficiency of the combustor 42 is improved by preheating the compressed air. During operation of the engine 10, the combustor 42 maintains a substantially continuous explosion that is fed by the fuel and air mixture. The explosion produces a rapidly-expanding flow of products of combustion.

The engine 10 also includes a turbine 46 that receives the products of combustion from the combustor 42. The expansion of the products of combustion discussed above drives the turbine 46. The turbine 46 in turn drives an electric generator 50 to generate electricity. The turbine 46 also drives the air compressor 38. The exhaust gases 34 from the turbine 46 are then routed through the exhaust gas flow spaces in the recuperator 18, as illustrated in Fig. 2, before the exhaust gases are finally vented to the atmosphere.

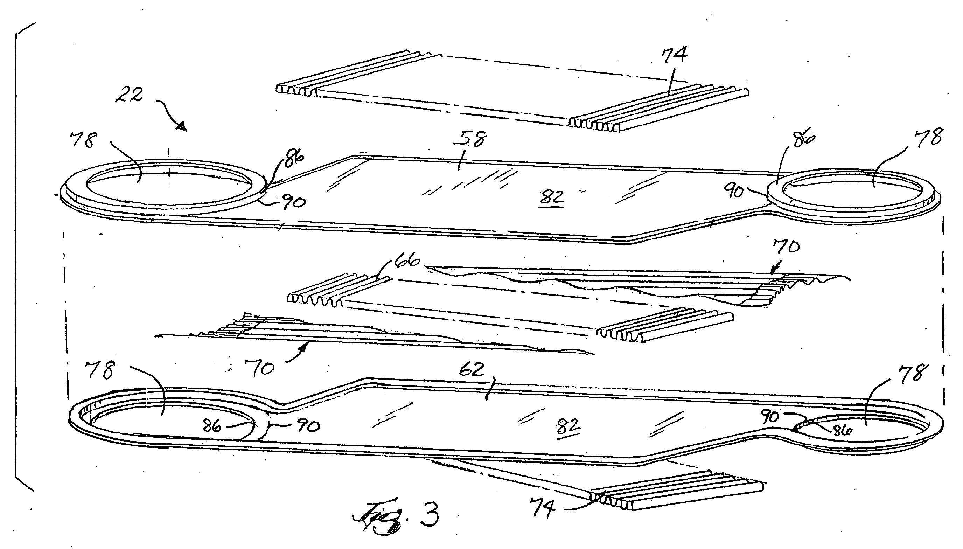

As seen in Fig. 3, each cell 22 of the recuperator 18 includes top and bottom plates or sheets 58, 62, an internal or matrix finned member 66, inlet and outlet header finned members 70, and external finned members 74. The top and bottom sheets 58, 62 define manifold openings 78 that align to define the manifolds 26, 30. The manifold openings 78 and manifolds 26, 30 are generally cylindrical in the illustrated embodiment, but could have other configurations.

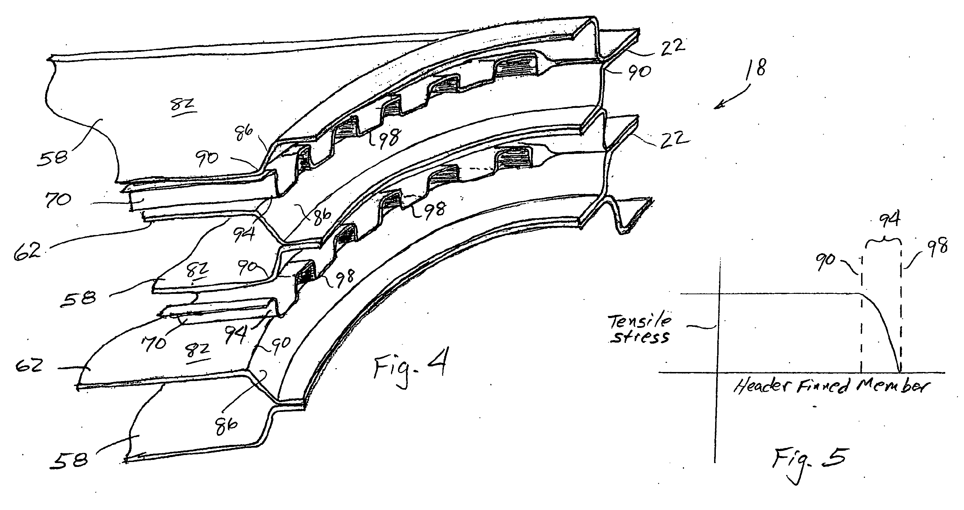

As seen in Figs. 3 and 4, the top and bottom sheets 58, 62 include substantially planar portions 82 and diverging portions 86 angled with respect to the planar portions 82. The diverging portions 86 and planar portions 82 define a divergence edge 90 therebetween, and the divergence edges 90 define the boundaries of the manifolds 26, 30. The planar portions 82 of the top sheets 58 are substantially parallel to the planar portions 82 of the bottom sheets 62.

The diverging portion 86 of the top sheet 58 of each cell 22 is angled away from the bottom sheet 62 and header finned member 70 of that cell 22, and is angled toward the bottom sheet 62 of the cell 22 above it. Similarly, the diverging portion 86 of the bottom sheet 62 of each cell 22 is angled away from the top sheet 58 and header finned member 70 of that cell 22, and is angled toward the top sheet 58 of the cell 22 below it. Adjacent cells 22 in the recuperator 18 are metallurgically bonded to each other where the diverging portions 86 of the top and bottom sheets 58, 62 come together. The sheets 58, 62 are also sealed to each other along their edges to substantially air-tightly seal the interior volume of the cell 22, except along the divergence edges 90, where the cell communicates with the respective inlet and outlet manifolds 26, 30.

The matrix and header finned members 66, 70 are metallurgically bonded to the top and bottom sheets 58, 62. The header finned members 70 are thus metallurgically bonded to the top and bottom sheets 58, 62 along the divergence edge 90. The compressed air increases pressure within the cells 22 and applies tensile stress on the matrix and header finned members 66, 70. A cantilever portion 94 of each header finned member 70 extends beyond the divergence edge 90 and into the manifolds 26, 30 in a cantilevered fashion. The cantilever portion 94 is therefore free from direct metallurgical bond to the top and bottom sheets 58, 62.

The cantilever portion 94 includes a free end edge 98 that is not aligned with the divergence edge 90. The free end edge 98 of the cantilever portion 94 may be cut and not polished or treated because the stress level on the free end edge 98 is reduced. This is because the free end edge 98 is not directly exposed to the tensile stresses in the header finned member 70 caused by the pressurized air in the cell 22. Rather, the cantilever portion 94 helps resist the tensile loading on the header finned member 70 while reducing the tensile stress on the free end edge 98.

More specifically, as illustrated in Fig. 5, the tensile stress on the header finned member 70 decreases over the span of the cantilever portion 94, and is substantially diminished or non-existent at the free end edge 98.

## Claims

1. A recuperated microturbine engine comprising:
an air compressor operable to create a flow of compressed air;
a combustor operable to mix the flow of compressed air with a fuel, and operable to combust the fuel/air mixture to create an expanding flow of products of combustion;
a turbine and generator assembly communicating with said combustor and operable in response to the expanding flow of products of combustion to generate electricity, said turbine and generator assembly exhausting a flow of hot exhaust gases; and
a recuperator including at least one cell through the inside of which said flow of compressed air flows, and around the outside of which the flow of exhaust gases flows, said recuperator preheating the flow of compressed air with heat from the flow of exhaust gases before the flow of compressed air is delivered to said combustor, said recuperator cell having top and bottom sheets and at least one header finned member sandwiched between and metallurgically bonded to said top and bottom sheets within the inside of said cell, said recuperator also including inlet and outlet manifolds communicating with the inside of said cell to direct the flow of the compressed air into and out of said cell, respectively;
wherein said header finned member includes a cantilever portion that is not directly metallurgically bonded to said top and bottom sheets and that extends into one of said inlet and outlet manifolds in a cantilever fashion, said cantilever portion including a free end edge within said manifold;
wherein said flow of compressed air creates a high pressure environment within said cell, which environment imparts tensile stresses to said header finned member; and
wherein said free end edge is subject to a substantially reduced state of tensile stress due to said cantilever extension of said header finned member into said manifold.

2. The engine of claim 1, wherein said header finned member is a first header finned member, said first header finned member extending into said inlet manifold, and wherein said cell further includes a second header finned member metallurgically bonded to said top and bottom sheets and having a cantilever portion extending into said outlet manifold.

3. The engine of claim 1, wherein said at least one cell includes a plurality of substantially identical cells arranged in a stacked configuration, said plurality of cells being metallurgically bonded to each other, and wherein said cells define exhaust gas flow spaces between said cells through which the flow of exhaust gases flows.

4. The engine of claim 1, wherein said top and bottom sheets each include a substantially flat portion, a diverging portion angled with respect to said substantially flat portion, and a divergence edge defined between said substantially flat portion and said diverging portion, wherein said flat portions of said top and bottom sheets are substantially parallel to each other, wherein said diverging portion of said top sheet extends away from said bottom sheet and said diverging portion of said bottom sheet extends away from said top sheet, and
wherein said cantilever portion is cantilevered with respect to said divergence edges.

5. The engine of claim 4, wherein said header finned member is metallurgically bonded to said flat portions of said top and bottom plates.

6. The engine of claim 4, wherein said divergence edge at least partially defines a boundary of one of said inlet and outlet manifolds.

7. A heat exchanger cell comprising:
top and bottom sheets each including a manifold opening, said top and bottom sheets being positioned in stacked relation relative to one another to align their respective manifold openings; and
a header finned member disposed between and metallurgically bonded to said top and bottom sheets, said header finned member having a cantilever portion extending into said manifold openings in cantilever fashion, said cantilever portion being free from a direct metallurgical bond to said top and bottom sheets, said cantilever portion terminating in a free end edge;
wherein said cell is adapted to receive a high pressure fluid therein that creates tensile stresses in said header finned member; and
wherein the tensile stresses on said free end edge are substantially less than those on the portion of said header finned member that is metallurgically bonded to said top and bottom sheets by virtue of said cantilever portion being free from direct metallurgical bond to said top and bottom sheets.

8. The cell of claim 7, wherein said top and bottom sheets each include a substantially planar portion, a diverging portion, and a divergence edge defined between said planar and diverging portions, and wherein said cantilever portion is cantilevered with respect to said divergence edge of at least one of said top and bottom sheets.

9. A plate-fin heat exchanger comprising a first cell including:
a top sheet and a bottom sheet each having a substantially planar portion and a diverging portion angled with respect to said planar portion and joined to said planar portion along a divergence edge, said diverging portion of each sheet at least partially defining a manifold opening generally aligned with a manifold opening at least partially defined by the diverging portion of the other sheet; and
a finned member between and metallurgically bonded to said planar portions of said top and bottom sheets and having a cantilever portion extending into said manifold openings and terminating in a free end edge, said cantilever portion being free from a direct metallurgical bond to said top and bottom sheets;
wherein said diverging portions of said top and bottom sheets both extend away from said finned member and wherein said divergence edges of said top and bottom sheets are metallurgically bonded to said finned member, and said cantilever portion is cantilevered with respect to said divergence edge.

10. The plate-fin heat exchanger of claim 9, further comprising a second cell substantially identical to said first cell and including a top sheet having a diverging portion metallurgically bonded to said diverging portion of said bottom sheet of said first cell.
